# EUROPEAN PATENT SPECIFICATION

(11) **EP 2 142 420 B1**
(45) Date of publication and mention of the grant of the patent: **07.09.2011**
(21) Application number: 08718926.2
(22) Date of filing: 31.03.2008
(51) Int. Cl.: B62D 29/04, B62D 33/04

(54) **ASSEMBLY OF BOX STRUCTURES**
ANORDNUNG FÜR KASTENFÖRMIGE STRUKTUREN
ASSEMBLAGE DE STRUCTURES DE BOÎTE

(30) Priority: 02.04.2007 GB 0706400
(43) Date of publication of application: 13.01.2010
(73) Proprietor: Omnia (cs) Limited, Nottingham NG1 1HW (GB)
(72) Inventor: BOERSMA, Walter, Nottingham NG1 1HWt (GB)
(74) Representative: Adamson Jones
(86) International application number: PCT/GB2008/001098
(87) International publication number: WO 2008/119965

(56) References cited:
- DE-A1- 19 843 969
- DE-U1- 29 502 176
- DE-U1- 29 809 542

## Description

This invention relates to a construction method according to claim 1, to manufacture large box like structures. The invention relates as well to a box structure made in accordance with this method. A box structure of this kind is known from DE 29809542 U.

The invention is used for making large box like structures, e.g. truck bodies, mobile storage units.

Box structures such as commercial vehicle bodywork are usually constructed from GRP/wood laminates, aluminium or steel. Such materials allow for standard mechanical fixings (bolts, rivets, screws) or adhesives (usually solvent based).

These types of assemblies utilise flat sheets or sandwich panels that are joined by means of extrusions and fixings. These extrusions are required to be fully structural to allow for the absorption of the stresses created through flexing and applied loads. They are also reliant upon additional sealants to ensure they are watertight and impervious to moisture ingress. However with time these deteriorate leading to a loss of integrity of the unit.

Further the assembly with existing systems for these box structures are generally labour intensive and require skilled operatives to perform most of the tasks involved. This means that high levels of resources and energy are required leading to relatively high production costs.

Further the units manufactured using the conventional systems are generally heavy and cumbersome due to the construction materials involved. This has a further implication, as vehicle-carrying load is the total load on the axle including the vehicle weight; the weight of the structure has a direct impingement on the volume of goods that can be legally carried. Providing a lighter structure increases the cargo that can be carried (Increased Payload Potential [IPP]) therefore providing the opportunity for increased efficiencies (such as; movements required, fuel usage, handling regulations).

In addition it should also be noted that with known systems the materials used include materials like plywood, and glass fibre reinforced polyesters. The use of these materials has a detrimental effect on the environment and the materials are amongst the groups of materials which cannot be easily recycled and used.

The aim of the invention is to improve the assembly of box like structures by optimising the operation in terms of speed, energy consumption as well as reducing the quantity of components and materials required. A further aim is to optimise materials cost and provide a technically advantageous and economical alternative to existing technologies and best practice. A further aim of the present invention is to provide a system that significantly increases the recyclability of the materials used, whether in this industry or for an alternative use.

In accordance with a first aspect of the invention there is provided a method of construction a box like structure formed from a number of panels each panel having an inner and an outer surface, which method of construction comprises: positioning and orientating at least two panels with respect to each other to form a corner; fitting a corner section to the corner to hold the corner in position and the edges of adjoining panels together; fixing and sealing the join between the adjoining panels; and repeating the steps outlined above until the box like structure is completed.

Accordingly, the present invention provides a method that enables manufacture of a box structure in simple and easy manner and allows assembly at a semi-skilled level in a user friendly and clean way in comparison with the current systems so providing a safer environment for those assembling the structures. The materials used can be specified to have high tensile structural properties and recyclability, light weight and resistance to corrosion, as well as having good load fatigue and absorption properties. Such materials are plastics or composite materials such as as fibre-reinforced polymer (FRP) or glass-reinforced plastic (GRP). One suitable material is MonoPan a woven glass and polypropylene faced panel with polypropylene honeycomb supplied by Omnia (CS) Ltd.

Further the method of fixing the structure dramatically reduces assembly time by fully utilising the unique properties of thermoplastic panel material. The structure can be assembled without the need of specialist jigs, making it possible to assemble structures in all types of locations without the need for specialist handling equipment and to conform to Health and Safety Manual Handling Legislation. The removal of the need for the specialist jig significantly reduces the investment outlay needed.

In addition the construction process is clean and semi-skilled by its nature and creates an extremely lightweight structure compared to commercially available alternatives. One example of this is with the devices needed for the assembly. Current systems use specialist welding, for example arc welding, in the manufacture with all the drawbacks and safety issues this brings with it. The current system utilises a thermofusion technique, such as plastic extrusion welding or hot air welding, which operate at lower temperatures and normally with a simple hand held tool technique. Therefore the safety issues are significantly reduced as well as reducing the need for a specialist operative. One consequence of this is that the system of the present invention can be used in environments such as outdoors for in situ manufacture.

The use of a plastic extrusion welding, or a similar method, enables the inner skins or surfaces of the thermoplastic composite sandwich panels to be joined in sequence to allow a free standing structure to be erected with the corner sections holding the panel edges together while welding. After cooling of the welded joint, the weld will take over the structural function, while the profile fulfils the role of covering element.

This method of assembly and joining creates a structure that is impervious to moisture ingress as it is "sealed" from the inside due to the plastic welding with the external "capping" providing an aesthetic and protective barrier.

Any impact or flexural stress is absorbed by the panels and transferred directly through the fused skins providing a lightweight and robust structure.

The various aspects of the invention are detailed in the attached claims 2 onwards.

The invention will now be illustrated by way of description of an example, with reference to the accompanying drawings, in which:
Figure 1 shows an isometric view of a box structure assembled according to the present invention;
Figure 2 shows an isometric view of the bottom panel with edge profiles attached of the box structure of Figure 1;
Figure 3 shows a detailed view of A as shown in Figure 2;
Figure 4 shows an isometric exploded view of the joined floor and bulkhead panel, the sidewall panel and the corner extrusion moved away from their final position of the box structure of Figure 1;
Figure 5 shows a plan view of a corner joined with a corner extrusion and a corner showing the squarely notched edge of the box structure of Figure 1;
Figure 6 is a plan view of a corner of a vehicle;
Figure 7 is a side elevation of a wind deflector for a vehicle;
Figure 8 is a rear elevation of part of the deflector of Figure 7;
Figure 9 is a cross section along the line A-A of Figure 8; and
Figure 10 is a view similar to that of Figure 9 showing the deflector bonded to a side panel.

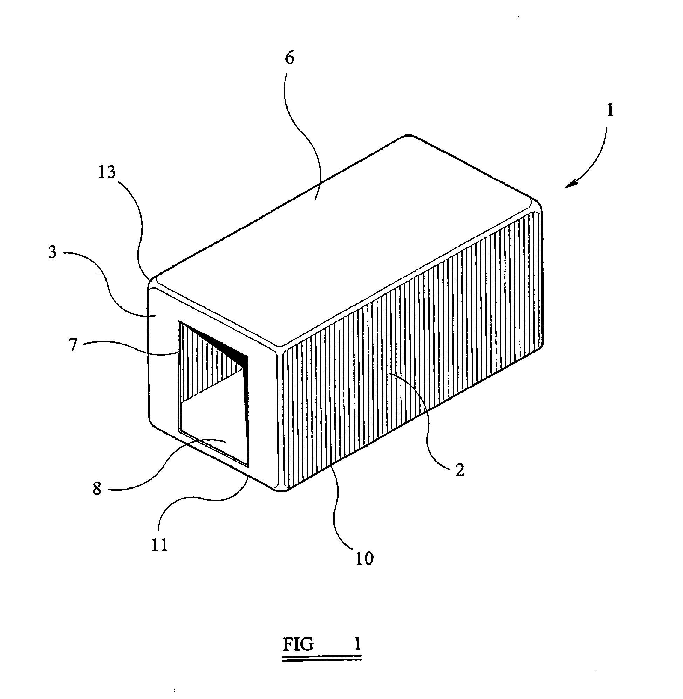

There is shown in Figure 1 of the drawings a box structure 1 made in accordance with the present invention. The box structure comprises two opposed side panels 2; two opposed end panels 3; a bottom or base panel 8 and a roof panel 6. One of the end panels 3 is provided with an entrance 7. The panels are assembled and jointed together in a manner that will now be described.

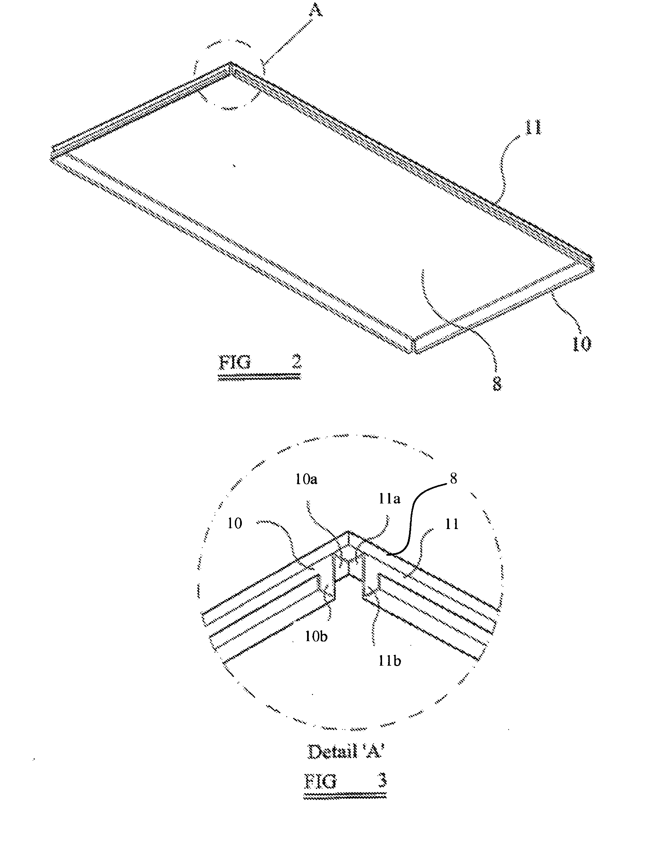

The bottom panel 8 provides the basic unit from which the box structure is assembled. This bottom panel 8 is shown in greater detail in figures 2 and 3 of the drawings. The bottom panel 8 is provided with, adjacent to its edges, suitable extrusions or profiles 10, 11 that assist in the location of the other panels about the bottom panel 8. Figure 2, shows an isometric view looking up from underneath the panel with the profiles 10, 11 mounted all around the panel adjacent the edges. The profiles 11 are fitted to the longer, side edges and the profiles 10 are fitted to the shorter, end edges of the panel.

The profiles are generally "S" shaped in cross section. The lower half of the "S" forms a U-shaped channel 10b, 11 b whilst the upper half of the "S" forms a horizontally extending flange or lip 10a, 11a.

Figure 3, shows an isometric detailed view of the corner of the bottom panel with the profiles 10, 11 in situ. The end corners of the lips 10a, 11 a of the profiles 10, 11 are chamfered. This enables the adjacent ends of the profiles to abut each other and properly locate the profiles with respect to the panel 8.

The profiles 10, 11 are an assembly aid, assisting to position and hold the panels in place for welding. They may be attached to the bottom panel 8 using various joining methods, including adhesive bonding, riveting or, when thermocomposite profiles are used, thermofusion or welding.

The profiles may or may not be structural members. In the former case they will in the main simply provide reinforcement, and could be used to great advantage when handling larger structures.

The base panels can be ready supplied with the profiles prefixed in position. However, where they are provided separately, the lips 10a, 11a of the profiles are fixed to the underside of the base panel so that the vertical limb of the profile "S" is aligned with the edge of the panel 8. The profiles thus provide channels 10b, 11b into which the side panels can be located.

To assemble the structure 1 the bottom panel 8 is located on a suitable surface which could simply be a flat surface such as a floor and the profiles 10, 11 are located in position and attached to the underside of the bottom panel 8. A first panel, for example the end, bulkhead panel (the end panel 3 without the entrance 7), is positioned with its lower edge located in the appropriate channel 10b of the profile. It is then secured in position to the bottom panel 8. For example, an extrusion can be placed over the joint between the two panels 3, 8 and heat welded, for example by thermofussion welding, into place to fix and seal the panels to one another. While one person holds the panel 3 in place another can weld the joining edge between the floor panel 8 and the end panel 3. A typical speed for joining by plastic extrusion welding is between 1 and 2 meters per minute.

Plastic welding can be done by extrusion welding, injecting melted thermoplastic in the joint and by hot air fusion, heating the joining surfaces and a bead of the same material to melt and fuse under application of pressure. Extrusion welding provides a stronger connection and is faster for thermo-composite panels with thin skins, typically 0.6 to 1.5 mm.

The joint needs a few minutes to cool before the panel can be released. This cooling time is much shorter than regular curing times for glue and sealant. After cooling down to ambient temperature the final strength is achieved.

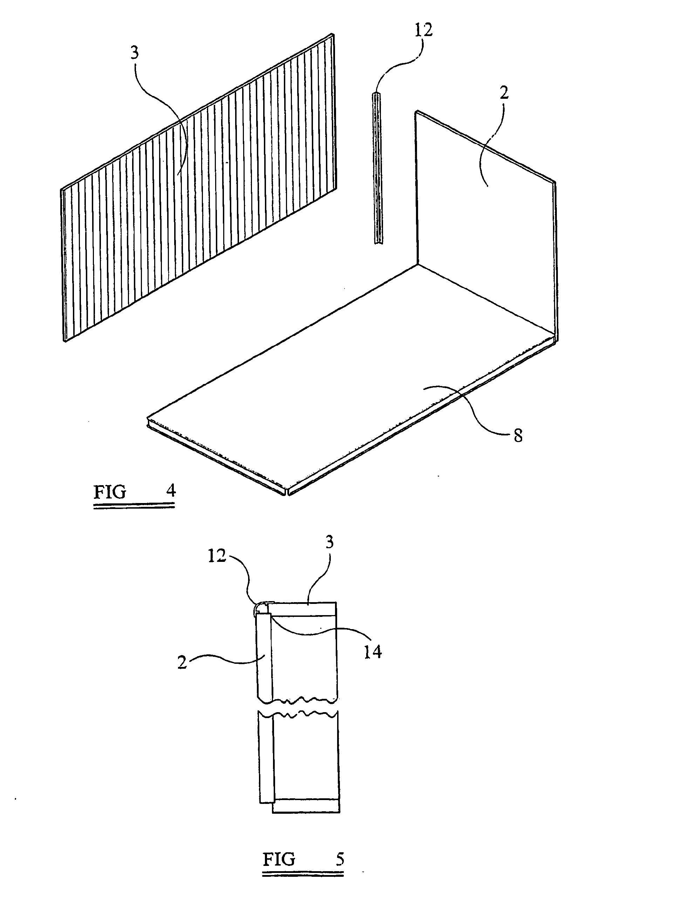

With the end and base panels 3 and 8 interconnected as described, one of the two side panels 2 is positioned in the channel 11b of the appropriate profile 11 so that its end edge abuts an adjacent edge of the panel 3 previously secured in position. A corner section or moulding 12 is located around the corner formed by the adjacent edges of the panels 2 and 3 and as can be seen in Figure 5, is shaped to fill the space formed by the adjacent end edges of the panels 2, 3. The corner section 12 is conveniently held in position using two-sided tape and assists in locating the adjacent panels with respect to each other i.e. holding them together at the corner. The inside surfaces of the adjacent edges of the panels 2 and 3 are heat welded to the bottom panel 8, for example by thermofusion welding as described above. The vertical edge joint of the panels 2 and 3 (the corner section) is also secured in the same manner. This is shown in Figure 4 of the drawings.

It will be appreciated that the panels 2 and 3 are held in position by the corner section 12 whilst the structural integrity of the formed box structure is provided by the heat welding of the panels 2, 3 and 8 to each other.

The other side panel e and then the remaining end panel 3 are fitted in a similar manner. The function performed by the corner sections 12 is now redundant and they may be removed if so desired. However they provide a neat and simple aesthetic finish to the edges of the panel and may simply be left in position.

In order to assist abutting of adjacent panels during assembly, one of two adjacent panels may have its joining edge provided with an L-shaped notch to receive the edge of the adjacent panel. This is shown in Figure 5.

After securing the end and side panels 2, 3 the roof panel 6 can be positioned. Positioning the roof panel 6 is assisted if one of the joining edges is notched as described above. Preferably the edges of the roof panel are notched all round. As with the corner sections of the end and side panels 2, 3 the abutting edges of the roof panel and end and side panels may be retained together, for example by corner sections 12, to assist welding. Once the roof panel is welded to the end and side panels the structural joining is complete.

A capping 13 can be applied to each of the upper corners to close the open ends of the corner sections 12. The capping can also be fitted prior to welding to assist in holding the panels together whilst welding.

The total assembly time is mainly dictated by the welding speed. A typical box structure of 4m length, 2.3m width and 2.3m height involves 35.6m of welding, which takes 15 to 30 minutes in total. A complete assembly time, depending on the extent of preparation, is therefore realistically less then 2 hours. With current technologies the assembly time is between 4 and 8 hours for a structure of this size.

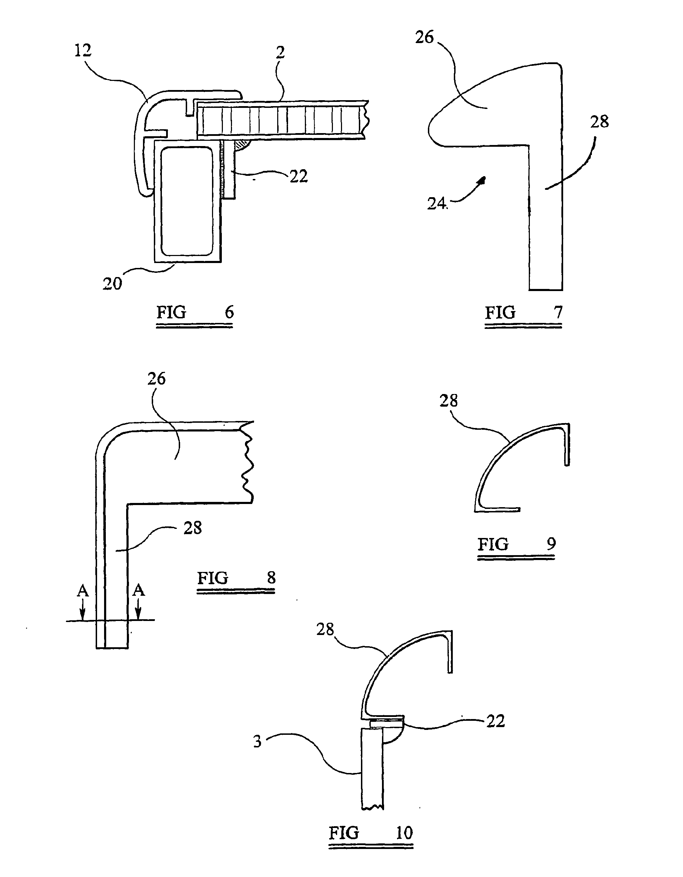

In some box-like vehicles the vehicle has a metal frame to which side, floor and roof panels are secured. Figure 6 is a plan view of a corner of such a vehicle showing a vertical metal upright 20 forming part of the frame. In order to enable welding of the side and end panels 2, 3 to the metal upright a strip 22 of polypropylene is bonded to the upright and the relevant panel 2, 3 is in turn welded to the strip 22. The strip 22 conveniently extends the full length of the upright 20. Alternatively, a number of shortened strips may be spaced apart along the upright, in which case the gaps would need to be filled with a sealant. A corner moulding 12 can be added as previously described.

In the transport industry many vehicles also have wind deflectors above the vehicle cab. Figure 7 shows a side elevation of a wind deflector 24 which has an upper deflecting portion 26 which overlies the vehicle cab and two depending arms 28, one each side of the deflecting portion 26 (Figure 8). Figure 9 shows a cross section through one arm 28 and as can be seen the arm has a flange which, in situ, lies in a plane generally perpendicular to the longitudinal axis of the vehicle. The flange extends along both arms and the deflecting portion and provides a suitable attachment area for attaching the deflector 24 to the body of the vehicle.

Figure 10 shows the cross section of Figure 9 with a side panel 3 welded to the arm 28 via a polypropylene strip 22, as in the embodiment of Figure 6. The strips can conveniently be laminated into the deflector mouldings during manufacture. The strips 22 can also be used to weld the panels to other parts such as cupboards and shelves.

Doors or windows can be fitted in the walls with standard technologies.

With the present invention there are two conventional technologies working together to provide the invention and also to provide the necessary product integrity.

With current systems there has been a heavy reliance on heavy, for example aluminium, frames. The present invention does not require the use of expensive or heavy aluminium extrusions to connect the panels or the use of a stationary jig for assembly. This removes significant elements of cost in the manufacture as it removes the need for skilled rather than semi skilled operators.

The panels can be assembled one by one using low cost, low weight materials to hold the panels in place. The assembly materials can stay in place to fulfil aesthetic functions. This way materials and cost are saved and no material goes to waste. The above method example describes a system wherein the bottom panel forms an integral element of the finished article. In an alternative system the bottom panel may simply provide a template on which the walls and roof of the structure are assembled. The finished article, not including the bottom panel, may then be removed from the template for use.

Insulation may be provided on the internal surfaces of the panels, preferably in the form of foam panels secured by two-sided adhesive tape. The insulation can be coated with a plastics material. This would be particularly useful for refrigeration vans.

The internal space of the structure can be divided by the provision of dividing walls which are simply abutted and welded into place.

## Claims

1. A method of construction of a large box like structure formed from a number of panels (2, 3) each panel having an inner and an outer surface, which method of construction comprises:
positioning and orientating two panels (2, 3) comprising thermoplastic material with respect to each other to form a corner (14) ;
fitting a corner section (12) to the corner (14) to hold one panel (2, 3) in position relative to the other prior to the structural joining of the panels (2, 3);
structural joining the two panels (2, 3) directly to one another along the corner (14) between adjoining panels (2, 3), thereby fixing and sealing the panels (2, 3) together;
and repeating the steps outlined above to join a further panel (2, 3) to one of said two panels (2, 3).

2. A method as claimed in claim 1 of the application wherein the corner section (12) is a polymeric formed corner section (12).

3. A method as claimed in claim 1 or claim 2 wherein the method also includes the step of removing the corner sections (12) from the completed box like structure.

4. A method as claimed in any of the previous claims wherein the box-like structure is constructed on a template.

5. A method as claimed in claim 4 wherein the template includes means to align the panels (2, 3) being assembled to form the construction.

6. A method as claimed in claim 4 or 5 wherein the means to align is a profiled section fitted on the template adjacent to its edge so that the panel (2, 3) when located on the template locates in the profiled section for correct alignment.

7. A method as claimed in claim 6 wherein the profiled section comprises an aluminium or a glass fibre reinforced extrusion.

8. A method as claimed in any of claims 5 to 7 wherein the panels (2, 3) include notches provided on one panel (2, 3) for engagement with protrusions on the second panel (2, 3).

9. A method as claimed in any of the preceding claims 4 to 8, wherein the template forms an integral component of the box-like structure.

10. A method as claimed in any preceding claim wherein the adjoining panels (2, 3) are fixed and sealed by heat welding.

11. A method as claimed in claim 10 wherein the heat welding comprises thermofusion welding, hot air welding, or plastic extrusion welding.

12. A method as claimed in any previous claim wherein the panels (2, 3) are composite sandwich panels (2, 3).

13. The method according to claim 1 wherein one of the panels (2, 3) comprising thermoplastic material is joined to a metal upright using a strip of polypropylene.

14. A box structure made in accordance with method of any claims 1 to 13.

## Patentansprüche

1. Verfahren für den Bau einer großen kastenartigen Konstruktion, die aus einer Anzahl von Platten (2, 3) hergestellt wird, wobei jede Platte eine Innen- und eine Außenfläche hat, wobei das Bauverfahren Folgendes umfasst:
Positionieren und Ausrichten von zwei thermoplastisches Material umfassenden Platten (2, 3) in Bezug aufeinander zum Bilden einer Ecke (14),
Anbringen eines Eckprofils (12) an der Ecke (14), um eine Platte (2, 3) relativ zu der anderen in Solllage zu halten, bevor die Platten (2, 3) strukturell zusammengefügt werden,
strukturelles Zusammenfügen der zwei Platten (2, 3) direkt aneinander entlang der Ecke (14) zwischen aneinander angrenzenden Platten (2, 3), wodurch die Platten (2, 3) aneinander befestigt und abgedichtet werden,
und Wiederholen der oben umrissenen Schritte, um eine weitere Platte (2, 3) mit einer der genannten zwei Platten (2, 3) zusammenzufügen.

2. Verfahren nach Anspruch 1 der Anmeldung, bei dem das Eckprofil (12) ein polymeres geformtes Eckprofil (12) ist.

3. Verfahren nach Anspruch 1 oder Anspruch 2, wobei das Verfahren auch den Schritt des Entfernens der Eckprofile (12) von der fertiggestellten kastenartigen Konstruktion beinhaltet.

4. Verfahren nach einem der vorhergehenden Ansprüche, bei dem die kastenartige Konstruktion auf einer Schablone aufgebaut wird.

5. Verfahren nach Anspruch 4, bei dem die Schablone ein Mittel zum Ausrichten der Platten (2, 3), die zusammengebaut werden, zum Herstellen des Gebildes beinhaltet.

6. Verfahren nach Anspruch 4 oder 5, bei dem das Mittel zum Ausrichten ein Profilstück ist, das an der Schablone an ihren Rand angrenzend angebracht wird, so dass die Platte (2, 3), wenn sie auf der Schablone angesetzt wird, zur richtigen Ausrichtung in dem Profilstück zu sitzen kommt.

7. Verfahren nach Anspruch 6, bei dem das Profilstück ein Aluminium- oder ein glasfaserverstärktes Strangpressteil umfasst.

8. Verfahren nach einem der Ansprüche 5 bis 7, bei dem die Platten (2, 3) an einer Platte (2, 3) bereitgestellte Ausnehmungen zum Einrasten von Vorsprüngen an der zweiten Platte (2, 3) beinhalten.

9. Verfahren nach einem der vorhergehenden Ansprüche 4 bis 8, bei dem die Schablone einen integrierten Bestandteil der kastenartigen Konstruktion bildet.

10. Verfahren nach einem der vorhergehenden Ansprüche, bei dem die aneinander angrenzenden Platten (2, 3) durch Schweißen befestigt und abgedichtet werden.

11. Verfahren nach Anspruch 10, bei dem das Schweißen Schmelzschweißen, Heißluftschweißen oder Kunststoff-Extrusionsschweißen umfasst.

12. Verfahren nach einem der vorhergehenden Ansprüche, bei dem die Platten (2, 3) zusammengesetzte Sandwichplatten (2, 3) sind.

13. Verfahren nach Anspruch 1, bei dem eine der Platten (2, 3), die thermoplastisches Material aufweist, unter Verwendung eines Polypropylenstreifens mit einer Metallstütze verbunden wird.

14. Kastenkonstruktion, die gemäß dem Verfahren nach einem der Ansprüche 1 bis 13 hergestellt wurde.

## Revendications

1. Procédé de construction d'une structure similaire à une grande boîte formée d'un certain nombre de panneaux (2, 3), chaque panneau ayant une surface interne et une surface externe, lequel procédé de construction comprend :
positionner et orienter deux panneaux (2, 3) comprenant du matériau thermoplastique l'un par rapport à l'autre pour former un angle (14) ;
fixer une section d'angle (12) à l'angle (14) pour maintenir un panneau (2, 3) en position par rapport à l'autre avant la jonction structurelle des panneaux (2, 3) ;
joindre structurellement les deux panneaux (2, 3) directement l'un à l'autre le long de l'angle (14) entre les panneaux adjacents (2, 3), en fixant et scellant ainsi les panneaux (2, 3) ensemble ;
et répéter les étapes décrites ci-dessus pour joindre un ultérieur panneau (2, 3) à l'un desdits deux panneaux (2, 3).

2. Procédé tel que revendiqué à la revendication 1 de l'application où la section d'angle (12) est une section d'angle formée polymère (12).

3. Procédé tel que revendiqué à la revendication 1 ou revendication 2 où le procédé inclut également l'étape de retrait des sections d'angle (12) de la structure similaire à une boîte achevée.

4. Procédé tel que revendiqué dans une quelconque des revendications précédentes où la structure similaire à une boîte est construite sur un modèle.

5. Procédé tel que revendiqué à la revendication 4 où le modèle inclut un moyen pour aligner les panneaux (2, 3) étant assemblés afin de former la construction.

6. Procédé tel que revendiqué à la revendication 4 ou 5 où le moyen d'alignement est une section profilée fixée sur le modèle adjacent à son bord, de sorte que le panneau (2, 3), lorsqu'il est situé sur le modèle, se situe dans la section profilée pour un alignement correct.

7. Procédé tel que revendiqué à la revendication 6 où la section profilée comprend une extrusion renforcée en aluminium ou fibre de verre.

8. Procédé tel que revendiqué dans une quelconque des revendications 5 à 7 où les panneaux (2, 3) incluent des encoches prévues sur un panneau (2, 3) pour la mise en prise avec des saillies sur le second panneau (2, 3).

9. Procédé tel que revendiqué dans une quelconque des revendications précédentes 4 à 8, où le modèle forme un composant intégral de la structure similaire à une boîte.

10. Procédé tel que revendiqué dans une quelconque revendication précédente où les panneaux adjacents (2, 3) sont fixés et scellés par thermosoudure.

11. Procédé tel que revendiqué à la revendication 10 où la thermosoudure comprend la soudure par thermofusion, la soudure à air chaud ou la soudure par extrusion plastique.

12. Procédé tel que revendiqué dans une quelconque revendication précédente où les panneaux (2, 3) sont des panneaux sandwich composites (2, 3).

13. Procédé selon la revendication 1 où l'un des panneaux (2, 3) comprenant du matériau thermoplastique est joint à un montant métallique en utilisant une bande de polypropylène.

14. Structure de boîte réalisée selon le procédé d'une quelconque des revendications 1 à 13.
